# EUROPEAN PATENT SPECIFICATION

(11) **EP 3 753 204 B1**
(45) Date of publication and mention of the grant of the patent: **03.07.2024**
(21) Application number: 18713172.7
(22) Date of filing: 19.03.2018
(51) Int. Cl.: H04L 41/0813, H04L 41/5009, H04L 41/5019, H04L 41/0895, H04L 41/40, H04L 43/08, H04L 43/20

(54) **END-TO-END NETWORK SLICING WITH 3RD-PARTY FUNCTIONS**
END-ZU-END-NETZWERK-SLICING MIT FUNKTIONEN VON DRITTANBIETERN
DÉCOUPAGE DE RÉSEAU DE BOUT EN BOUT AVEC DES FONCTIONS TIERCES

(43) Date of publication of application: 23.12.2020
(73) Proprietor: HUAWEI TECHNOLOGIES CO., LTD., Shenzhen, Guangdong 518129 (CN)
(72) Inventor: XIAO, Xun, 80992 Munich (DE); AN, Xueli, 80992 Munich (DE); HECKER, Artur, 80992 Munich (DE); WU, Jianjun, 80992 Munich (DE); PENG, Chenghui, 80992 Munich (DE)
(74) Representative: Isarpatent
(86) International application number: PCT/EP2018/056902
(87) International publication number: WO 2019/179599

(56) References cited:
- US-A1- 2016 359 682
- US-A1- 2018 077 023

## Description

### TECHNICAL FIELD

The present invention generally relates to the field of communication network technology. Particularly, the present invention relates next generation of mobile networks.

### BACKGROUND

The next generation of mobile networks (5G) is expected to support many new types of connections between various devices such as cars, wearables, sensors and actuators from both private and industrial environments. The new types of connections imply very distinct service requests on latency, data rate and others, which require different treatments and thereby pose challenges to the control of the 5G networks.

In particular, supporting various new types of services means a deep impact on the core network architecture. In today's mobile network, services mainly refer to the access of portable devices in human hands for data and voice services only. Core networks serve the portable devices following a best-effort principle. Hence, those services are predictable and how to respond them can be well pre-planned. With various new service requests, however, service patterns turn to be more heterogeneous. Consequently, service requests to the 5G network are hard to be predicted. The way to meet the requirements is to agilely respond the incoming services in a dynamic way.

In as much as administratively pre-planning approaches with static network deployment will not work in the next generation mobile network, new principles such as Software-Defined Networking (SDN) as found in B. Lantz, B. Heller, and N. McKeown, "A network in a laptop: rapid prototyping for software-defined networks," Proceedings of the 9th ACM SIGCOMM Workshop on Hot Topics in Networks, 2010, p. 19 and network function virtualization (NFV) as found in J. Martins et al., "ClickOS and the art of network function virtualization," Proceedings of the 11th USENIX Conference on Networked Systems Design and Implementation, 2014, pp. 459-473, are seen as the two key enablers to realize a flexible and programmable network infrastructure.

With this two enabling technologies, responding to new service requests becomes much easier than before given that any network functions (NFs) can be deployed/allocated on-demand (NFV's features) and forwarding behaviors of them can be remotely programmed (SDN's features), just like installing and running a computer program.

In the upcoming 5G era, it is expected that there will be increasingly large number of services from the 3^{rd}-party vertical industry also provided through the mobile network. Legacy best-effort quality-of-service (QoS) is, however, incapable of supporting the 3^{rd}-party services whose QoS requirements are quite heterogeneous.

In order to support the heterogeneous service level agreement (SLA) requirements over a shared infrastructure in the future mobile network, virtualizations of the networking (i.e. SDN) and NF resources (i.e. NFV) are utilized, converting the infrastructure to be programmable. This generates the concept of network slicing, where multiple network tenants have their own network resources that are isolated from each other and SLA guaranteed. Such a portion of isolated network resources for one tenant is a virtualized logical network accommodated in the shared infrastructure, called a network slice instance (NSI). Therefore, based on the network slicing concept, different 3rd-party service providers (e.g. customers from vertical industries) expect to host their services within individual NSIs whose performances are agreed with a service level agreement (SLA) and guaranteed.

An end-to-end SLA, however, is difficult to be guaranteed by the above solutions. First of all, the current NSI is not an end-to-end (E2E) definition but covers solely the mobile network part. In other words, external parties may or may not support network slicing. For example, even if the traffic goes through an NSI and its SLA can be guaranteed within the mobile network transmissions, the traffic will be treated as best-effort after going out to the public domain network, the E2E SLA guarantee fails.

US 2018/0077023 A1 discloses architectures, methods and systems that allow reconfigurability of the network to suit the needs of various parties.

US 2016/0359682 A1 discloses a system and a method for virtual infrastructure management between operator networks.

### SUMMARY

Having recognized the above-mentioned disadvantages and problems, the present invention aims at improving the state of the art. In particular, an object of the present invention is to provide network entities and methods for guaranteeing an end-to-end service according to a service level agreement. For example, an object of the invention is to enhance the mechanism that a network operator and a 3rd-party service provider work with each other by using a real-time coordination method. Here, between the operator and service provider, the end-to-end quality of service of network slice instances can be monitored and the performance indicator information can be exchanged. This guarantees that both parties can cooperatively provide the SLA for a 3rd-party service.

The above-mentioned object is achieved by the appended set of claims.

The network entity can advantageously adjust the network slice instance in accordance with service provider real-time performance indicator data of a service provider service function in the service provider domain. This has the advantage that the end-to-end service can be guaranteed across the operator network domain and the service provider domain.

The interface between the entities is defined more specifically. This has the advantage that a control interface between the controlling entities in the two domains is used.

The network entity adapts the network slice instance based on both the according to the operator network real-time performance indicator data and the service provider real-time performance indicator data. This has the advantage that the configuration can be improved and determined more precisely.

The real-time performance indicator data of the operator network domain and service provider domain is time aligned. This has the advantage that the real-time performance indicator data from the same time instance is used to configure the network slice instance.

It is possible to guarantee requirements for the end-to-end service in accordance with the service level agreement. This has the advantage that the configuration can be adapted to fulfill the requirements according to the service level agreement.

Performance indicator data is provided to the service provider domain such that the end-to-end service can be adjusted by an entity in the service provider domain. This has the advantage that the end-to-end service can be guaranteed across the operator network domain and a service provider domain.

The network entity can advantageously configure the virtualized compute platform in accordance with operator network real-time performance indicator data. This has the advantage that the end-to-end service can be guaranteed across the operator network domain and a service provider domain.

A dedicated control interface between the controlling entities in the two domains is defined. This has the advantage that the control and user data are separated.

The network entity adjusts the virtualized compute platform based on both the operator network performance indicator data and the service provider performance indicator data of the end-to-end service. This has the advantage that the current configuration can be improved and determined more precisely.

The real-time performance indicator data of the operator network domain and service provider domain is time aligned. This has the advantage that data from same time instances is used to control the service network function, which leads to a better service.

Performance indicator data is provided to the operator network domain such that the end-to-end service can be adjusted by an entity in the operator network domain. This has the advantage that the end-to-end service can be guaranteed across the operator network domain and a service provider domain.

The method can be performed in an automatic and repeatable manner. Advantageously, the computer program can be respectively performed at the transmitter according to the second aspect or at the receiver according to the fourth aspect.

More specifically, it should be noted that the apparatuses (network entities) of the present invention may each be implemented as or comprise a discrete hardware circuitry (e.g., with discrete hardware components, integrated chips or arrangements of chip modules), or a signal processing device or chip controlled by a software routine or program stored in a memory, written on a computer-readable medium or downloaded from a network such as the internet.

It shall further be understood that a preferred embodiment of the invention can also be any combination of the dependent claims with the respective independent claim.

### BRIEF DESCRIPTION OF THE DRAWINGS

The above aspects and implementation forms of the present invention will be explained in the following description of specific embodiments in relation to the enclosed drawings, in which:
Fig. 1 shows a block diagram of a next generation mobile network according to an embodiment of the invention.
Fig. 2 shows a block diagram of a network slice management function according to an embodiment of the invention.
Fig. 3 shows a block diagram of a NFV-MANO according to an embodiment of the invention.
Fig. 4 shows a message exchange between operator network and service provider coordination functions according to an embodiment of the invention.
Fig. 5 shows a message exchange between a NSMF entity and NSIs/ packet gateway according to an embodiment of the invention.
Fig. 6 shows a message exchange between a NFV-MANO entity and a virtualized compute platform according to an embodiment of the invention.

### DETAILED DESCRIPTION OF EMBODIMENTS OF THE INVENTION

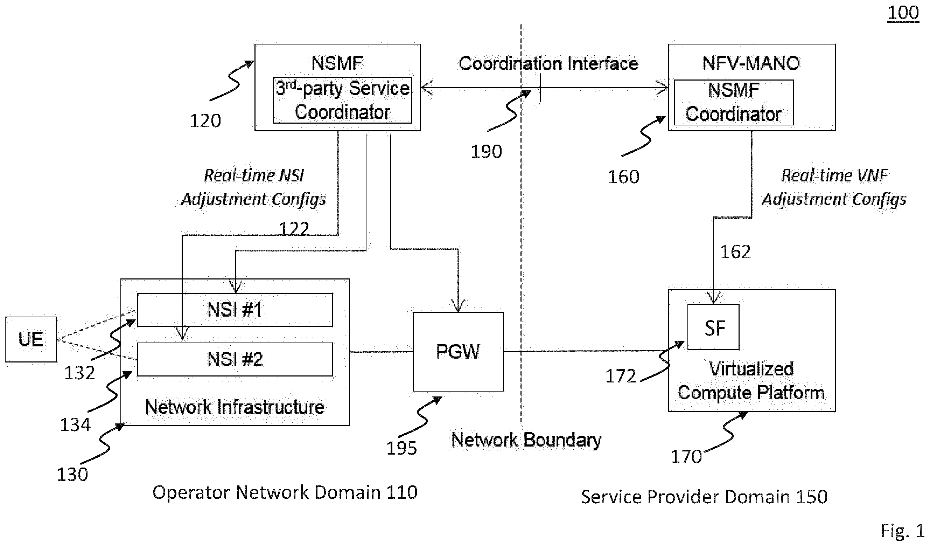

Fig. 1 shows a block diagram of a next generation mobile network. It comprises an operator network domain 110 and a service provider domain 150, also referred to as a 3rd-party service provider domain. The operator network domain 110 is managed by a network operator. The service provider domain 150 is managed by a service provider, also referred to as 3rd-party service provider. Both the network operator and the 3rd-party service provider are different parties and their domains are managed independently from each other. Between the network operator and the service provider, service-level agreements (SLAs) can be in place that define the services to be provided by each of the network operator and the service provider. The SLAs may relate to end-to-end services.

The operator network domain 110 comprises network infrastructure 130 for transporting data through the operator network. The data can be transported between a UE and a packet data gateway 195. Packet data gateway 195 may define the network boundary of the network provider domain 110.

The network infrastructure 130 comprises network slice instances (NSIs) 132, 134. A network slice instance (NSI) 132, 134 can be defined as a set of network functions and resources to run network functions, forming a complete instantiated logical network to meet certain network characteristics. A NSI 132 can be logically and/or physically isolated from another NSI 134 even if the same physical hardware is used.

A NSI 132, 134 can be dynamically created to serve a particular service type based on an agreed service-level agreement (SLA). The SLA may define requirements such as ultra-low-latency, ultra-reliability etc. The infrastructure 130 may comprise a plurality of NSIs.

NSIs 132, 134 are managed by a network slice management function (NSMF) entity 120. The NSMF entity 120 is responsible for the whole NSI lifecycle, i.e. preparations, resource commissioning, operations and decommissioning of NSIs 132, 134. The NSMF entity 120 may instruct the NSI 132, 134 to adjust the configuration of the NSI 132, 134 for a specific service during operations (i.e. during run-time). This can be done by sending instructions, e.g. messages.

The service provider domain 150 comprises a virtualized compute platform 170. The virtualized compute platform 170 can provide one or more service functions (SF) 172 that are dynamically created, operated and destroyed.

The virtualized compute platform 170 with its one or more service functions 172 is managed by a network function virtualization management and orchestration (NFV-MANO) entity 160. NFV-MANO entity 160 can manage the virtualized compute platform 170 according to an agreed SLA of an end-to-end service. The NFV-MANO entity 160 may instruct the virtualized compute platform to adjust the configuration for a specific service during operations (i.e. during run-time). This can be done by sending instructions, e.g. messages.

In existing systems, the NSMF entity 120 in the operator network domain 110 is only aware of the real-time performance of the end-to-end service in the operator network domain 110 but has no or only limited information about the real-time performance of the end-to-end service in the service provider domain 150. Similarly, the NFV-MANO entity 160 in the service provider domain 150 is only aware of the real-time performance of the end-to-end service in the service provider domain 150 but has no or only limited information about the real-time performance of the end-to-end service in the operator network domain 110. This may result in configurations where both the NSI 132, 134 and the SF 172 are configured in a way that the SLA for the end-to-end service is over-provisioned. Such over-provisioning results in the NSI 132, 134 and the SF 172 use more resources than actually required for the end-to-end service.

The present invention advantageously solves the disadvantage by exchanging real-time performance indicator data between the operator network domain 110 and the service provider domain 150 for the end-to-end service. This allows the NSMF entity 120 in the operator network domain 110 to adjust the configuration of the NSI 132, 134 based on the performance of the end-to-end service across the operator network domain 110 and the service provider domain 150. Similarly, the NFV-MANO entity 160 in the service provider domain 150 may adjust the configuration of the SF 172 based on the performance of the end-to-end service across the operator network domain 110 and the service provider domain 150.

Performance indicator data is generally data related to at least one key performance indicator (KPI) of the network. The at least one KPI may be one or more of: peak data rate, latency, user experienced data rate, area traffic capacity, connection density, energy efficiency, reliability, mobility, mobility interruption time, system bandwidth support, coverage, UE battery life, or others. Real-time performance data means that the KPI data is obtained in real-time, i.e. instantly without any additional delay. Inasmuch as both the NSMF entity and the NFV-MANO entity have instantly symmetric performance information, real-time adjustments can be performed during the operation of the network.

In one embodiment, the end-to-end service may require a certain latency. The latency requirement is part of the SLA. Accordingly, both the NSI 132, 134 and the SF 172 may be configured with a latency such that the required latency is always met, including some latency margin.

The NSMF entity 120 may determine based on the real-time performance indicator data of the service provider domain that the overall latency of the end-to-end service is over-provisioned. Therefore, the NSMF entity 120 determines an adjustment 122 for the configuration of the NSI 132, 134 for the end-to-end service. The adjustment may increase the latency of the NSI 132, 134 by reducing resources of the NSI 132, 134. The determined adjustment 122 is sent from the NSMF entity 120 to the NSI 132, 134. The NSI 132, 134 adjusts accordingly. Because the NSMF entity 120 determines the adjustment 122 based on real-time performance data of the service provider domain for the end-to-end service, the overall latency of the end-to-end service remains in the limits of the agreed SLA.

In another embodiment, the NSMF entity 120 may determine that the latency of the end-to-end service in the operator network domain increases. Because the NSMF entity 120 receives real-time performance indicator data of the service provider domain for the of the end-to-end service, the NSMF entity 120 may determine that there is no need to adjust the NSI 132, 134 because the overall latency is still in the limits of the agreed SLA.

In another embodiment, the NSMF entity 120 may determine based on the real-time performance indicator data of the service provider domain for the end-to-end service that the latency of the end-to-end service in the service provider increases. Therefore, the NSMF entity 120 determines an adjustment 122 for the configuration of the NSI 132, 134. The adjustment 122 may reduce the latency of the NSI 132, 134 by increasing resources of the NSI 132, 134. The determined adjustment 122 is sent from the NSMF entity 120 to the NSI 132, 134. The NSI 132, 134 adjusts accordingly. Because the NSMF entity 120 determines the adjustment 122 based on real-time performance data of the service provider domain for the end-to-end service, the overall latency of the end-to-end service remains in the limits of the agreed SLA.

In another embodiment, the NFV -MANO entity 160 may determine based on the real-time performance indicator data of the operator network domain that the overall latency of the end-to-end service is over-provisioned. Therefore, the NFV -MANO entity 160 determines an adjustment 162 for the configuration of the virtualized compute platform 170. The adjustment 162 may increase the latency of the virtualized compute platform 170 for the end-to-end service by freeing resources. The determined adjustment 162 is sent from the NFV -MANO entity 160 to the virtualized compute platform 170. The virtualized compute platform 170 adjusts accordingly. Because the NFV -MANO entity 160 determines the adjustment 162 based on real-time performance data of the operator network domain for the end-to-end service, the overall latency of the end-to-end service remains in the limits of the agreed SLA.

In another embodiment, the NFV -MANO entity 160 may determine that the latency of the end-to-end service in the service provider domain increases. Inasmuch as the NFV -MANO entity 160 receives real-time performance indicator data of the operator network domain for the end-to-end service, the NFV - MANO entity 160 may determine that there is no need to adjust the virtualized compute platform 170 because the overall latency is still in the limits of the agreed SLA.

In another embodiment, the NFV -MANO entity 160 may determine based on the real-time performance indicator data of the operator network domain that the latency of the end-to-end service in the operator network domain increases. Therefore, the NFV -MANO entity 160 determines an adjustment 162 for the configuration of the virtualized compute platform 170. The adjustment 162 may decrease the latency of the virtualized compute platform 170 by assigning more resources of the virtualized compute platform to the end-to-end service. The determined adjustment 162 is sent from the NFV -MANO entity 160 to the virtualized compute platform 170. The virtualized compute platform 170 adjusts accordingly. Because the NFV -MANO entity 160 determines the adjustment 162 based on real-time performance data of the operator network domain for the end-to-end service, the overall latency of the end-to-end service remains in the limits of the agreed SLA.

It has to be understood that the above embodiments use latency for illustration purpose. Instead of latency, any other KPI may be used.

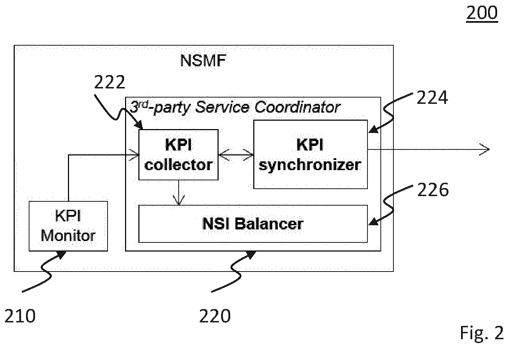

Fig. 2 shows a NSMF entity 200 with additional modules according to one embodiment of the present invention. NSMF entity 200 comprises a 3rd-party service coordinator module 220, also referred to as an end-to-end service slicing coordinating function (E2E-SSCF). The 3rd-party service coordinator module 220 receives real-time key performance indicator data for the end-to-end service from KPI monitor module 210. KPI monitor module 210 has a connection to the NSI 132, 134. The 3rd- party service coordinator module 220 also receives real-time performance indicator data for the end-to-end service from a 3rd-party service provider via KPI synchronizer module 224. The performance KPI synchronizer 224 module synchronizes the KPI information from the 3rd-party service provider so that mutual KPI monitoring information is symmetrically updated in real-time. The performance KPI synchronizer 224 module may use time stamps in the KPI data to synchronize the KPI information. NSMF entity 200 further comprises an NSI balancer module 220 for determining adjustments to the NSI configurations. The NSI balancer module 220 uses the local KPI monitoring information from the KPI monitor module 210 and the remotely synchronized KPI monitoring information received via the KPI synchronizer module 224 to decide if adjustments to the NSIs are necessary. The adjustments may include function migration, resource assignment, configuration adjustment and others.

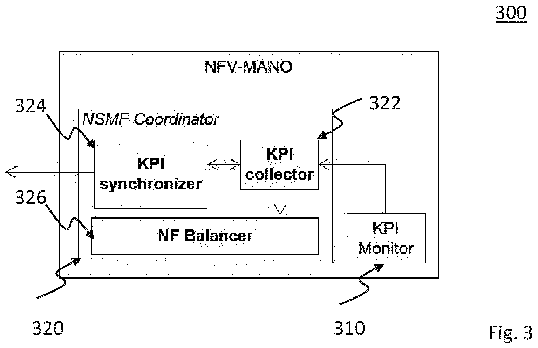

Fig. 3 shows a NFV-MANO entity 300 with additional modules according to one embodiment of the present invention. The NFV-MANO entity 300 comprises a NSMF coordinator module 320. The NSMF coordinator module 320 receives real-time key performance indicator data for the end-to-end service from KPI monitor 310. KPI monitor module 310 has a connection to the virtual compute platform 170. The NSMF coordinator module 320 also receives real-time key performance indicator data for the end-to-end service from a network operator via KPI synchronizer module 324. The performance KPI synchronizer 324 module synchronizes the KPI information from the network operator so that mutual KPI monitoring information is symmetrically updated in real-time. The performance KPI synchronizer 324 module may use time stamps in the KPI data to synchronize the KPI information. NFV-MANO entity 300 further comprises a network function (NF) balancer module 320 for determining adjustments to the NSI configurations. The NF balancer module 220 uses the local KPI monitoring information from the KPI monitor module 210 and the remotely synchronized KPI monitoring information received via the KPI synchronizer module 224 to decide if adjustments to the network functions in the virtual compute platform 170 are necessary. The adjustments may include function migration, resource assignment, configuration adjustment and others.

The NSMF coordinator module 320 of the NFV-MANO entity 300 is connected to 3rd- party service coordinator module 220 of the NSMF entity 200 via coordination interface 190. In one embodiment, coordination interface 190 is implemented as a dedicated path during the pre-installation and configuration of the network. The dedicated path may be a physical connection or a tunnelling path. The coordination interface 190 is required to provide a stable connection across the two domains with enough capacity and a latency that meets the synchronization constraints.

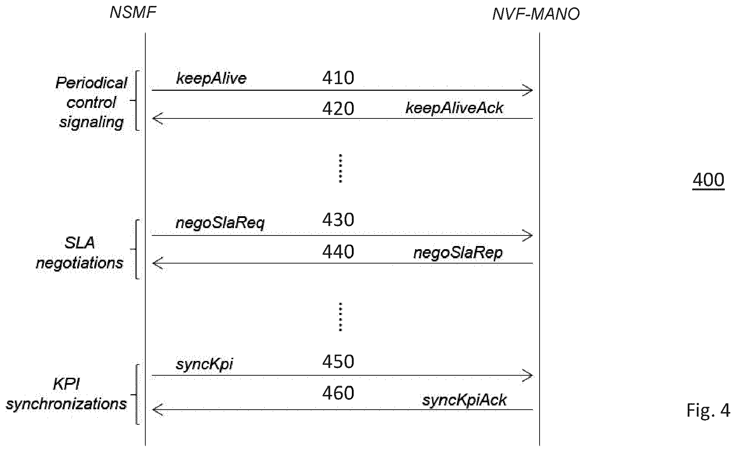

Fig. 4 depicts interaction scenarios 400 between the 3rd-party service coordinator module 220 of the NSMF entity 120 and the NSMF coordinator module 320 of the NFV-MANO entity 160 over the coordination interface 190 according to one embodiment of the present invention.

A first scenario relates to periodical control signaling. Here, the 3rd-party service coordinator module 220 of the NSMF entity 120 may send periodically a keepAlive message 410 to the NSMF coordinator module 320 of the NFV-MANO entity 160. In response to receiving the keepAlive message 410, NSMF coordinator module 320 sends a keepAliveAck message 420 to the 3rd- party service coordinator module 220. The message exchange ensures that the coordination interface 190 is functional.

A second scenario relates to SLA negotiation. Here, the 3rd-party service coordinator module 220 of the NSMF entity 120 sends a negoSlaReq message 430 to the NSMF coordinator module 320 of the NFV-MANO entity 160. In response to receiving the negoSlaReq message 430, the NSMF coordinator module 320 sends a negoSlaRep message 440 to 3rd- party service coordinator module 220. The message exchange is for SLA negotiation where the 3rd-party service is planned to be initiated after an autonomous negotiation between the network operator and the service provider.

A third scenario is related to KPI synchronizations. Here, the 3rd-party service coordinator module 220 of the NSMF entity 120 sends a syncKpi message 450 to the NSMF coordinator module 320 of the NFV-MANO entity 160. In response to receiving the syncKpi message 450, the NSMF coordinator module 320 sends a syncKpiAck message 460 to 3rd-party service coordinator module 220. In another embodiment, the NSMF coordinator module 320 of the NFV-MANO entity 160 sends the syncKpi message 450 to 3rd-party service coordinator module 220 of the NSMF entity 120. In response to receiving the syncKpi message 450, the 3rd-party service coordinator module 220 sends the syncKpiAck message 460 to NSMF coordinator module 320. The message exchange is for synchronization of monitoring KPIs from the network operator and the service provider.Parameters for the above messages are depicted in the following table. It has to be noted that there may be additional and/or other parameters for the respective messages. Moreover, the name of the messages may be different.

| Scenario | Message Type | Parameters |
|---|---|---|
| *Periodical control signaling* | **keepAlive** | E2E-SSCF_ID, E2E_Srv_ID, time_stamp |
| | **keepAliveAck** | E2E-3rdSCF_ID, time_stamp |
| *SLA negotiation* | **negoSlaReq** | E2E_Srv_ID, ns_available_bw, ns_available_latcy, |
| | **negoSlaRep** | E2E_Srv_ID, isAccept, nf_available_bw, nf_available_latcy |
| *KPI synchronizations* | **syncKpi** | E2E_Srv_ID, KPIs (ns_bw, ns_latcy) |
| | **syncKpiAck** | E2E_Srv_ID, KPIs (nf_bw, nf_latcy) |

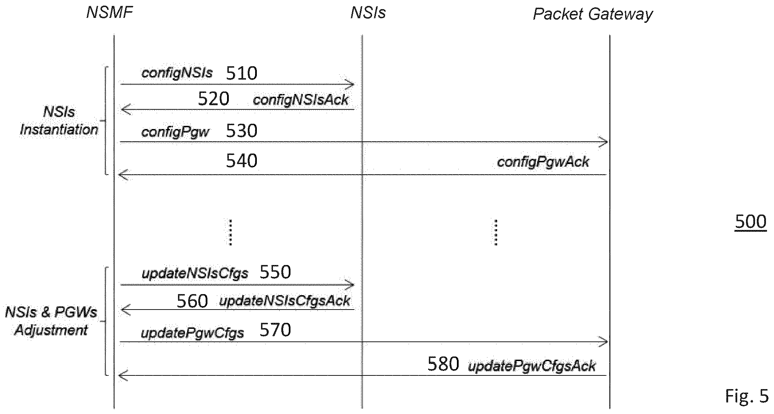

Fig. 5 shows a procedure 500 for the NSMF 120 applying changes (i.e. adjustments to the configuration) on existing NSIs 132, 134 according to an embodiment of the present invention. The NSIs 132, 134 may be deployed according to the procedures defined in the current 3GPP SA5, as found in 3GPP, "System Architecture for the 5G System; Stage 2," 3rd Generation Partnership Project (3GPP), Technical Specification (TS) 23.501, 2017.

In one embodiment, adjustments to the NSIs 132, 134 can be bandwidth allocation and/or reallocation of a specific NSI, NSI-NF migrations, NSI resource defragmentation and others. The NSI balancer module 126 of NSMF 120 sends an instruction to the NSI 132, 134 to adjust the network slice instance based on determined adjustments. The instruction may be an updateNSIsCfgs message 510, 550. In response to the updateNSIsCfgs message 510, 550, NSI 132, 134 may send a configNSIsAck message 520, 560 to the NSMF 120.

The adjustments may be determined based on performance indicator data of the service provider domain 150 and requirements of the end-to-end service, the performance indicator data of the service provider domain 150 being real-time performance indicator data of the end-to-end service in the service provider domain 150.

In addition, the NSMF 120 may also have to apply adjustments on the packet gateway 195 interfacing to the 3rd-party service provider. The NSI balancer module 126 of NSMF 120 sends an instruction to the packet gateway 195. This can be done by the NSMF 120 sending an updatePgwCfgs message 530, 570. In response to receiving the updatePgwCfgs message 530, 570, packet gateway 195 may send a configPgwAck message 540, 580.

Parameters for the messages as shown in Fig. 5 are depicted in the following table. It has to be noted that there may be additional and/or other parameters for the respective messages. Moreover, the name of the messages may be different.

| Scenario | Message Type | Parameters |
|---|---|---|
| *NSI Instantiation* | **configNSIs** | NSI_Type, NSI_NFs, NSI_NF_Graph |
| | **configNSIsAck** | isNsiCfgAccepted, unAcptParams |
| | **configPgw** | E2E_Srv_ID, Srv_Priority, Srv_Pkt_Policy |
| | **configPgwAck** | isPgwCfgAccepted, unAcptParams |
| *NSIs* & *PGWs Adjustment* | **updateNSIsCfgs** | NSI _Type, NSI_upNFs, NSI_NF_upGraph |
| | **updateNSIsCfgsAck** | isNsiCfgUpAccepted, unAcptParams |
| | **updatePgwCfgs** | E2E_Srv_Id, Srv_upPriority, Srv_Pkt_upPolicy |
| | **updatePgwCfgsAck** | isPgwCfgUpAccepted, unAcptParams |

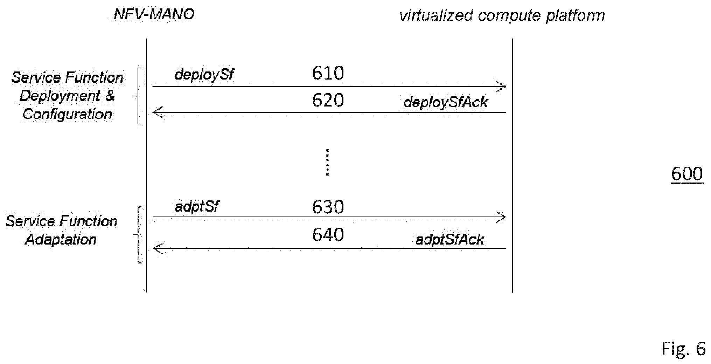

Fig. 6 shows a NFV-MANO 160 to SF 172 message exchange 600 according to an embodiment of the present invention. The NFV-MANO 160 may have to apply changes (i.e. adaptations) on the launched SFs 172 that are deployed by following the procedure as found in M. Ersue, "ETSI NFV management and orchestration-An overview," in Proc. of 88th IETF meeting, 2013. Possible adjustments to these procedures include NF migrations, compute resource (re-)allocations for NF (e.g. instantiating more NF instances), resource defragmentation and others.

In one scenario related to SF deployment, NVF-MANO 160 sends a deploySf message 610 to virtualized compute platform 170. In response to receiving the deploySf message 610, virtualized compute platform 170 sends a deploySfAck message 620.

In one scenario related to SF adaptation, NVF-MANO 160 sends an adaptSf message 630 to virtualized compute platform 170. In response to receiving the adaptSf message 630, virtualized compute platform 170 sends an adaptSfAck message 640.

Parameters for the messages as shown in Fig. 6 are depicted in the following table. It has to be noted that there may be additional and/or other parameters for the respective messages. Moreover, the name of the messages may be different.

| Scenario | Message Type | Parameters |
|---|---|---|
| SF Deployment & Configuration | **deploySf** | E2E_Srv_ID, Sf_Params, ... |
| | **deploySfAck** | isSfCfgAccepted, unAcptParams, ... |
| SF Adapation | **adptSf** | E2E_Srv_ID, upSf_Params, ... |
| | **adptSfAck** | isSfUpCfgAccepted, unAcptParams, ... |

In general, the embodiment of the interactive scheme is not limited to a specific type of infrastructures. Implementations of that can be done by any feasible computer programs.

In the claims, the word "comprising" does not exclude other elements or steps, and the indefinite article "a" or "an" does not exclude a plurality. A single processor or other unit may fulfil the functions of several items recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. A network entity (120) for controlling an end-to-end service, the end to end service is provided across an operator network domain (110) which is managed by a network operator and a service provider domain (150) which is managed by a third party service provider and managed independently from the operator network domain (110),
the network entity (120) is part of the operator network domain (110);
**characterized in that** the network entity (120) is configured to:
determine an adjustment for a network slice instance (132, 134) in the operator network domain (110) based on performance indicator data of the service provider domain (150) and requirements of the end-to-end service, the performance indicator data of the service provider domain (150) being real-time performance indicator data of the end-to-end service in the service provider domain (150),
send (122) an instruction to adjust the network slice instance (132, 134) in accordance with the determined adjustment,
wherein the network entity (120) is configured to:
determine the adjustment for the network slice instance (132, 134) also based on performance indicator data of the operator network domain (110), the performance indicator data of the operator network domain (110) being real-time performance indicator data of the end-to-end service in the operator network domain (110),
wherein the network entity (120) is further configured to:
synchronize the performance indicator data of the operator network domain (110) and the performance indicator data of the service provider domain (150); and
determine the adjustment for the network slice instance (132, 134) based on the synchronized performance indicator data of the service provider domain and based on the synchronized performance indicator data of the operator network domain.

2. The network entity (120) of claim 1, wherein the network entity is further configured to:
receive the performance indicator data from the service provider domain (150) over an interface (109) between the network entity and an entity (160) controlling the end-to-end service in the service provider domain (150).

3. The network entity (120) of claim 1 or 2, wherein the requirements of the end-to-end service are based on a service level agreement.

4. A method for controlling an end-to-end service, the end to end service is provided across an operator network domain (110) which is managed by a network operator and a service provider domain (150) which is managed by a third party service provider and managed independently from the operator network domain (110), **characterized in that** the method comprises:
synchronizing performance indicator data of the operator network domain (110) and performance indicator data of the service provider domain (150), the performance indicator data of the service provider domain (150) being real-time performance indicator data of the end-to-end service in the service provider domain (150), the performance indicator data of the operator network domain (110) being real-time performance indicator data of the end-to-end service in the operator network domain (110),
determining, in the operator network domain, an adjustment for a network slice instance (132, 134) of the operator network domain (110) based on the synchronized performance indicator data of the service provider domain (150), the synchronized performance indicator data of the operator network domain (110), and requirements of the end-to-end service,
sending (122) an instruction to adjust the network slice instance (132, 134) in accordance with the determined adjustment.

5. A network entity (160) for controlling an end-to-end service, the end to end service is provided across an operator network domain (110) which is managed by a network operator and a service provider domain (150) which is managed by a third party service provider and managed independently from the operator network domain (110),
the network entity (160) is part of the service provider domain (150);
**characterized in that** the network entity (160) is configured to:
determine an adjustment for a virtualized compute platform (170) of the service provider domain (150) based on performance indicator data of the operator network domain (110) and requirements of the end-to-end service, the performance indicator data of the operator network domain (110) being real-time performance indicator data of the end-to-end service in the operator network domain (110),
send (162) an instruction to adjust the virtualized compute platform (170) in accordance with the determined adjustment,
wherein the network entity (160) is further configured to:
determine the adjustment for the virtualized compute platform (170) also based performance indicator data of the service provider domain (150), the performance indicator data of the service provider domain (150) being real-time performance indicator data of the end-to-end service in the service provider domain (150),
wherein the network entity (160) is further configured to:
synchronize the performance indicator data of the operator network domain (110) and the performance indicator data of the service provider domain (150); and
determine the adjustment for the virtualized compute platform based on the synchronized performance indicator data of the service provider domain and based on the synchronized performance indicator data of the operator network domain.

6. The network entity (160) of claim 5, wherein the network entity is further configured to:
receive the performance indicator data of the operator network domain (110) over an interface (190) between the network entity and an entity (120) controlling the end-to-end service in the operator network domain (150).

7. The network entity (160) of claim 5 or 6, wherein the requirements of the end-to-end service are based on a service level agreement.

8. A method for controlling an end-to-end service, the end to end service is provided across an operator network domain (110) which is managed by a network operator and a service provider domain (150) which is managed by a third party service provider and managed independently from the operator network domain (110), **characterized in that** the method comprises:
synchronizing performance indicator data of the operator network domain (110) and performance indicator data of the service provider domain (150), the performance indicator data of the service provider domain (150) being real-time performance indicator data of the end-to-end service in the service provider domain (150), the performance indicator data of the operator network domain (110) being real-time performance indicator data of the end-to-end service in the operator network domain (110),
determining, in the service provider domain, an adjustment for a virtualized compute platform (170) in the service provider domain (150) based on the synchronized performance indicator data of the operator network domain (110), the synchronized performance indicator data of the service provider domain (150), and requirements of the end-to-end service,
sending (162) an instruction to adjust the virtualized compute platform (170) in accordance with the determined adjustment.

9. A computer readable medium, comprising a computer program, which when executed by a computer, cause the computer to carry out the method according to claims 4 or 8.

## Patentansprüche

1. Netzwerkeinheit (120) zum Steuern eines End-to-End-Dienstes, wobei der End-to-End-Dienst über eine Betreibernetzwerkdomäne (110), die durch einen Netzwerkbetreiber verwaltet wird, und eine Dienstanbieterdomäne (150), die durch einen Drittdienstanbieter verwaltet und unabhängig von der Betreibernetzwerkdomäne (110) verwaltet wird, bereitgestellt wird,
wobei die Netzwerkeinheit (120) Teil der Betreibernetzwerkdomäne (110) ist;
**dadurch gekennzeichnet, dass** die Netzwerkeinheit (120) zu Folgendem konfiguriert ist:
Bestimmen einer Anpassung für eine Netzwerk-Slice-Instanz (132, 134) in der Betreibernetzwerkdomäne (110) basierend auf Leistungsindikatordaten der Dienstanbieterdomäne (150) und Anforderungen des End-to-End-Dienstes, wobei die Leistungsindikatordaten der Dienstanbieterdomäne (150) Echtzeit-Leistungsindikatordaten des End-to-End-Dienstes in der Dienstanbieterdomäne (150) sind,
Senden (122) einer Anweisung, die Netzwerk-Slice-Instanz (132, 134) gemäß der bestimmten Anpassung anzupassen,
wobei die Netzwerkeinheit (120) zu Folgendem konfiguriert ist: Bestimmen der Anpassung für die Netzwerk-Slice-Instanz (132, 134) ebenfalls basierend auf Leistungsindikatordaten der Betreibernetzwerkdomäne (110), wobei die Leistungsindikatordaten der Betreibernetzwerkdomäne (110) Echtzeit-Leistungsindikatordaten des End-to-End-Dienstes in der Betreibernetzwerkdomäne (110) sind,
wobei die Netzwerkeinheit (120) ferner zu Folgendem konfiguriert ist:
Synchronisieren der Leistungsindikatordaten der Betreibernetzwerkdomäne (110) und der Leistungsindikatordaten der Dienstanbieterdomäne (150); und
Bestimmen der Anpassung für die Netzwerk-Slice-Instanz (132, 134) basierend auf den synchronisierten Leistungsindikatordaten der Dienstanbieterdomäne und basierend auf den synchronisierten Leistungsindikatordaten der Betreibernetzwerkdomäne.

2. Netzwerkeinheit (120) nach Anspruch 1, wobei die Netzwerkeinheit ferner zu Folgendem konfiguriert ist:
Empfangen der Leistungsindikatordaten von der Dienstanbieterdomäne (150) über eine Schnittstelle (109) zwischen der Netzwerkeinheit und einer Einheit (160), die den End-to-End-Dienst in der Dienstanbieterdomäne (150) steuert.

3. Netzwerkeinheit (120) nach Anspruch 1 oder 2, wobei die Anforderungen des End-to-End-Dienstes auf einer Dienstleistungsvereinbarung basieren.

4. Verfahren zum Steuern eines End-to-End-Dienstes, wobei der End-to-End-Dienst über eine Betreibernetzwerkdomäne (110), die durch einen Netzwerkbetreiber verwaltet wird, und eine Dienstanbieterdomäne (150), die durch einen Drittdienstanbieter verwaltet und unabhängig von der Betreibernetzwerkdomäne (110) verwaltet wird, bereitgestellt wird, **dadurch gekennzeichnet, dass** das Verfahren Folgendes umfasst:
Synchronisieren von Leistungsindikatordaten der Betreibernetzwerkdomäne (110) und Leistungsindikatordaten der Dienstanbieterdomäne (150), wobei die Leistungsindikatordaten der Dienstanbieterdomäne (150) Echtzeit-Leistungsindikatordaten des End-to-End-Dienstes in der Dienstanbieterdomäne (150) sind, wobei die Leistungsindikatordaten der Betreibernetzwerkdomäne (110) Echtzeit-Leistungsindikatordaten des End-to-End-Dienstes in der Betreibernetzwerkdomäne (110) sind,
Bestimmen, in der Betreibernetzwerkdomäne, einer Anpassung für eine Netzwerk-Slice-Instanz (132, 134) der Betreibernetzwerkdomäne (110) basierend auf den synchronisierten Leistungsindikatordaten der Dienstanbieterdomäne (150), den synchronisierten Leistungsindikatordaten der Betreibernetzwerkdomäne (110) und Anforderungen des End-to-End-Dienstes,
Senden (122) einer Anweisung, die Netzwerk-Slice-Instanz (132, 134) gemäß der bestimmten Anpassung anzupassen.

5. Netzwerkeinheit (160) zum Steuern eines End-to-End-Dienstes, wobei der End-to-End-Dienst über eine Betreibernetzwerkdomäne (110), die durch einen Netzwerkbetreiber verwaltet wird, und eine Dienstanbieterdomäne (150), die durch einen Drittdienstanbieter verwaltet und unabhängig von der Betreibernetzwerkdomäne (110) verwaltet wird, bereitgestellt wird,
wobei die Netzwerkeinheit (160) Teil der Dienstanbieterdomäne (150) ist;
**dadurch gekennzeichnet, dass** die Netzwerkeinheit (160) zu Folgendem konfiguriert ist:
Bestimmen einer Anpassung für eine virtualisierte Rechenplattform (170) der Dienstanbieterdomäne (150) basierend auf Leistungsindikatordaten der Betreibernetzwerkdomäne (110) und Anforderungen des End-to-End-Dienstes, wobei die Leistungsindikatordaten der Betreibernetzwerkdomäne (110) Echtzeit-Leistungsindikatordaten des End-to-End-Dienstes in der Betreibernetzwerkdomäne (110) sind,
Senden (162) einer Anweisung, die virtualisierte Rechenplattform (170) gemäß der bestimmten Anpassung anzupassen,
wobei die Netzwerkeinheit (160) ferner zu Folgendem konfiguriert ist:
Bestimmen der Anpassung für die virtualisierte Rechenplattform (170) ebenfalls basierend auf Leistungsindikatordaten der Dienstanbieterdomäne (150), wobei die Leistungsindikatordaten der Dienstanbieterdomäne (150) Echtzeit-Leistungsindikatordaten des End-to-End-Dienstes in der Dienstanbieterdomäne (150) sind,
wobei die Netzwerkeinheit (160) ferner zu Folgendem konfiguriert ist:
Synchronisieren der Leistungsindikatordaten der Betreibernetzwerkdomäne (110) und der Leistungsindikatordaten der Dienstanbieterdomäne (150); und
Bestimmen der Anpassung für die virtualisierte Rechenplattform basierend auf den synchronisierten Leistungsindikatordaten der Dienstanbieterdomäne und basierend auf den synchronisierten Leistungsindikatordaten der Betreibernetzwerkdomäne.

6. Netzwerkeinheit (160) nach Anspruch 5, wobei die Netzwerkeinheit ferner zu Folgendem konfiguriert ist:
Empfangen der Leistungsindikatordaten der Betreibernetzwerkdomäne (110) über eine Schnittstelle (190) zwischen der Netzwerkeinheit und einer Einheit (120), die den End-to-End-Dienst in der Betreibernetzwerkdomäne (150) steuert.

7. Netzwerkeinheit (160) nach Anspruch 5 oder 6, wobei die Anforderungen des End-to-End-Dienstes auf einer Dienstleistungsvereinbarung basieren.

8. Verfahren zum Steuern eines End-to-End-Dienstes, wobei der End-to-End-Dienst über eine Betreibernetzwerkdomäne (110), die durch einen Netzwerkbetreiber verwaltet wird, und eine Dienstanbieterdomäne (150), die durch einen Drittdienstanbieter verwaltet und unabhängig von der Betreibernetzwerkdomäne (110) verwaltet wird, bereitgestellt wird, **dadurch gekennzeichnet, dass** das Verfahren Folgendes umfasst:
Synchronisieren von Leistungsindikatordaten der Betreibernetzwerkdomäne (110) und Leistungsindikatordaten der Dienstanbieterdomäne (150), wobei die Leistungsindikatordaten der Dienstanbieterdomäne (150) Echtzeit-Leistungsindikatordaten des End-to-End-Dienstes in der Dienstanbieterdomäne (150) sind, wobei die Leistungsindikatordaten der Betreibernetzwerkdomäne (110) Echtzeit-Leistungsindikatordaten des End-to-End-Dienstes in der Betreibernetzwerkdomäne (110) sind,
Bestimmen, in der Dienstanbieterdomäne, einer Anpassung für eine virtualisierte Rechenplattform (170) in der Dienstanbieterdomäne (150) basierend auf den synchronisierten Leistungsindikatordaten der Betreibernetzwerkdomäne (110), den synchronisierten Leistungsindikatordaten der Dienstanbieterdomäne (150) und Anforderungen des End-to-End-Dienstes,
Senden (162) einer Anweisung, die virtualisierte Rechenplattform (170) gemäß der bestimmten Anpassung anzupassen.

9. Computerlesbares Medium, umfassend ein Computerprogramm, das, wenn es durch einen Computer ausgeführt wird, den Computer dazu veranlasst, das Verfahren gemäß Anspruch 4 oder 8 durchzuführen.

## Revendications

1. Entité de réseau (120) pour commander un service de bout en bout, le service de bout en bout est fourni à travers un domaine de réseau d'opérateur (110) qui est géré par un opérateur de réseau et un domaine de prestataire de services (150) qui est géré par un prestataire de services tiers et géré indépendamment du domaine de réseau d'opérateur (110),
l'entité de réseau (120) fait partie du domaine de réseau d'opérateur (110) ;
**caractérisée en ce que** l'entité de réseau (120) est configurée pour :
déterminer un ajustement pour une instance de tranche de réseau (132, 134) dans le domaine de réseau d'opérateur (110) sur la base de données d'indicateur de performance du domaine de prestataire de services (150) et d'exigences du service de bout en bout, les données d'indicateur de performance du domaine de prestataire de services (150) étant des données d'indicateur de performance en temps réel du service de bout en bout dans le domaine de prestataires de services (150),
envoyer (122) une instruction pour ajuster l'instance de tranche de réseau (132, 134) conformément à l'ajustement déterminé,
dans laquelle l'entité de réseau (120) est configurée pour :
déterminer l'ajustement pour l'instance de tranche de réseau (132, 134) également sur la base de données d'indicateur de performance du domaine de réseau d'opérateur (110), les données d'indicateur de performance du domaine de réseau d'opérateur (110) étant des données d'indicateur de performance en temps réel du service de bout en bout dans le domaine de réseau d'opérateur (110),
dans laquelle l'entité de réseau (120) est également configurée pour :
synchroniser les données d'indicateur de performance du domaine de réseau d'opérateur (110) et les données d'indicateur de performance du domaine de prestataire de services (150) ; et
déterminer l'ajustement pour l'instance de tranche de réseau (132, 134) sur la base des données d'indicateur de performance synchronisées du domaine de prestataire de services et sur la base des données d'indicateur de performance synchronisées du domaine de réseau d'opérateur.

2. Entité de réseau (120) selon la revendication 1, dans laquelle l'entité de réseau est également configurée pour :
recevoir les données d'indicateur de performance du domaine de prestataire de services (150) via une interface (109) entre l'entité de réseau et une entité (160) commandant le service de bout en bout dans le domaine de prestataire de services (150).

3. Entité de réseau (120) selon la revendication 1 ou 2, dans laquelle les exigences du service de bout en bout sont basées sur un accord de niveau de service.

4. Procédé de commande d'un service de bout en bout, le service de bout en bout est fourni à travers un domaine de réseau d'opérateur (110) qui est géré par un opérateur de réseau et un domaine de prestataire de services (150) qui est géré par un prestataire de services tiers et géré indépendamment du domaine de réseau d'opérateur (110), **caractérisé en ce que** le procédé comprend :
la synchronisation des données d'indicateur de performance du domaine de réseau d'opérateur (110) et les données d'indicateur de performance du domaine de prestataire de services (150), les données d'indicateur de performance du domaine de prestataire de services (150) étant des données d'indicateur de performance en temps réel du service de bout en bout dans le domaine de prestataire de services (150), les données d'indicateur de performance du domaine de réseau d'opérateur (110) étant des données d'indicateur de performance en temps réel du service de bout en bout dans le domaine de réseau d'opérateur (110),
la détermination, dans le domaine de réseau d'opérateur, d'un ajustement pour une instance de tranche de réseau (132, 134) du domaine de réseau d'opérateur (110) sur la base des données d'indicateur de performance synchronisées du domaine de prestataire de services (150), des données d'indicateur de performance synchronisées du domaine de réseau d'opérateur (110) et des exigences du service de bout en bout,
l'envoi (122) d'une instruction pour ajuster l'instance de tranche de réseau (132, 134) conformément à l'ajustement déterminé.

5. Entité de réseau (160) pour commander un service de bout en bout, le service de bout en bout est fourni à travers un domaine de réseau d'opérateur (110) qui est géré par un opérateur de réseau et un domaine de prestataire de services (150) qui est géré par un prestataire de services tiers et géré indépendamment du domaine de réseau d'opérateur (110),
l'entité de réseau (160) fait partie du domaine de prestataire de services (150) ;
**caractérisée en ce que** l'entité de réseau (160) est configurée pour :
déterminer un ajustement pour une plateforme informatique virtualisée (170) dans le domaine de prestataire de services (150) sur la base de données d'indicateur de performance du domaine de réseau d'opérateur (110) et d'exigences du service de bout en bout, les données d'indicateur de performance du domaine de réseau d'opérateur (110) étant des données d'indicateur de performance en temps réel du service de bout en bout dans le domaine de réseau d'opérateur (110),
envoyer (162) une instruction pour ajuster la plateforme informatique virtualisée (170) conformément à l'ajustement déterminé,
dans laquelle l'entité de réseau (160) est également configurée pour :
déterminer l'ajustement pour la plateforme informatique virtualisée (170) également sur la base de données d'indicateur de performance du domaine de prestataire de services (150), les données d'indicateur de performance du domaine de prestataire de services (150) étant des données d'indicateur de performance en temps réel de service de bout en bout dans le domaine de prestataire de services (150),
dans laquelle l'entité de réseau (160) est également configurée pour :
synchroniser les données d'indicateur de performance du domaine de réseau d'opérateur (110) et les données d'indicateur de performance du domaine de prestataire de services (150) ; et
déterminer l'ajustement pour la plateforme informatique virtualisée sur la base des données d'indicateur de performance synchronisées du domaine de prestataire de services et sur la base des données d'indicateur de performance synchronisées du domaine de réseau d'opérateur.

6. Entité de réseau (160) selon la revendication 5, dans laquelle l'entité de réseau est également configurée pour :
recevoir les données d'indicateur de performance du domaine de réseau d'opérateur (110) via une interface (190) entre l'entité de réseau et une entité (120) commandant le service de bout en bout dans le domaine de réseau d'opérateur (150).

7. Entité de réseau (160) selon la revendication 5 ou 6, dans laquelle les exigences du service de bout en bout sont basées sur un accord de niveau de service.

8. Procédé de commande d'un service de bout en bout, le service de bout en bout est fourni à travers un domaine de réseau d'opérateur (110) qui est géré par un opérateur de réseau et un domaine de prestataire de services (150) qui est géré par un prestataire de services tiers et géré indépendamment du domaine de réseau d'opérateur (110), **caractérisé en ce que** le procédé comprend :
la synchronisation des données d'indicateur de performance du domaine de réseau d'opérateur (110) et les données d'indicateur de performance du domaine de prestataire de services (150), les données d'indicateur de performance du domaine de prestataire de services (150) étant des données d'indicateur de performance en temps réel du service de bout en bout dans le domaine de prestataire de services (150), les données d'indicateur de performance du domaine de réseau d'opérateur (110) étant des données d'indicateur de performance en temps réel du service de bout en bout dans le domaine de réseau d'opérateur (110),
la détermination, dans le domaine de prestataire de services, d'un ajustement pour une plateforme informatique virtualisée (170) dans le domaine de prestataire de services (150) sur la base des données d'indicateur de performance synchronisées du domaine de réseau d'opérateur (110), des données d'indicateur de performance synchronisées du domaine de prestataire de services (150) et des exigences du service de bout en bout,
l'envoi (162) d'une instruction pour ajuster la plateforme informatique virtualisée (170) conformément à l'ajustement déterminé.

9. Support lisible par ordinateur comprenant un programme informatique qui, lorsqu'il est exécuté par un ordinateur, amène l'ordinateur à mettre en œuvre le procédé selon les revendications 4 ou 8.
